# EUROPEAN PATENT APPLICATION

(11) **EP 4 841 338 A1**
(43) Date of publication of application: **18.11.2026**
(21) Application number: 26178010.0
(22) Date of filing: 11.05.2026
(51) Int. Cl.: G02F 1/13357, F21V 8/00

(54) **DISPLAY DEVICE**

(30) Priority: 13.05.2025 WO PCT/KR2025/006488
(71) Applicant: LG Electronics Inc., Yeongdeungpo-gu Seoul 07336 (KR)
(72) Inventor: JOUNG, Pildoo, 07796 Seoul (KR); PARK, Heajung, 07796 Seoul (KR); LEE, Jeoungoun, 07796 Seoul (KR); JEONG, Sehoon, 07796 Seoul (KR)
(74) Representative: Vossius & Partner Patentanwälte Rechtsanwälte mbB

(57) **Abstract**

A display device is disclosed. The display device of the present disclosure comprises: a light source (124) configured to emit white light by including phosphors including β-SiAlON, KSF, and a nitride;
a display panel (110) configured to display an image through light provided from the light source;
an optical sheet (125) disposed on an optical path from the light source toward the display panel;
a light guide panel (128) disposed on the optical path from the light source toward the optical sheet;
and a reflective sheet (126) located opposite to the optical sheet with respect to the light guide panel, wherein the reflective sheet comprises: a reflective film including a PET material and cavities;
and a coating layer laminated on the reflective film, wherein the coating layer comprises: a plurality of beads by which light is diffusely reflected;
and an absorbent configured to selectively absorb at least one of yellow-based light or orange-based light among light directed toward the reflective film or light reflected from the reflective film, wherein the absorbent is 0.0003 wt% to 0.0005 wt% based on a total weight of the coating layer.

## Description

### Technical Field

The present disclosure relates to a display device.

### Background Art

As the information society develops, demands for display devices are increasing in various forms. In response to this, various display devices such as Liquid Crystal Display Devices (LCDs) have recently been researched and used.

Among them, a liquid crystal panel of an LCD includes a liquid crystal layer, and a TFT substrate and a color filter substrate facing each other with the liquid crystal layer interposed therebetween. The liquid crystal panel may display an image using light provided from a backlight unit.

Recently, as interest in the image quality of display devices has increased, color expression capabilities or color reproducibility close to true color have received significant attention. Consequently, much research is being conducted on image quality improvement to realize true color.

### Summary of Invention

### Technical Problem

An object of the present disclosure is to solve the above-mentioned problems and other problems.

Another object is to provide a display device capable of improving image quality.

Another object is to provide a display device capable of improving color reproducibility.

Another object is to provide a display device capable of effectively controlling the wavelength of light provided from a backlight unit.

### Technical Solution

To achieve the above or other objects, according to an aspect of the present disclosure, a display device comprises:
a light source configured to emit white light by including phosphors including β-SiAlON, KSF, and Nitride;
a display panel configured to display an image through light provided from the light source;
an optical sheet including a prism sheet and disposed on an optical path from the light source toward the display panel;
a light guide panel disposed on the optical path from the light source toward the optical sheet; and
a reflective sheet located opposite to the optical sheet with respect to the light guide panel, wherein the reflective sheet comprises: a reflective film including a PET material and cavities; and
a coating layer laminated on the reflective film, wherein the coating layer comprises:
   a plurality of beads by which light is diffusely reflected; and
   an absorbent configured to selectively absorb at least one of yellow-based light or orange-based light among light directed toward the reflective film or light reflected from the reflective film, wherein the absorbent may be 0.0003 wt% to 0.0005 wt% based on a total weight of the coating layer.

### Advantageous Effects

The effects of the display device according to the present disclosure are described as follows.

According to at least one of the embodiments of the present disclosure, the image quality of a display device can be improved.

Further, according to at least one of the embodiments of the present disclosure, color reproducibility can be improved.

Further, according to at least one of the embodiments of the present disclosure, the wavelength of light provided from a backlight unit can be effectively controlled.

Additional scope of applicability of the present disclosure will become apparent from the detailed description below.

However, since various changes and modifications within the spirit and scope of the present disclosure may be clearly understood by those skilled in the art, it should be understood that the detailed description and specific embodiments, such as preferred embodiments of the present disclosure, are given by way of example only.

### Brief Description of Drawings

FIGS. 1 to 6 are diagrams illustrating examples of a display device related to the present disclosure.
FIGS. 7 and 8 are diagrams illustrating examples of light provided from a display device related to the present disclosure and spectrums thereof.
FIG. 9 is a diagram illustrating an example of a spectrum of light absorbed by an absorbent provided in a display device according to an embodiment of the present disclosure.
FIGS. 10 to 14 are diagrams illustrating examples of spectrums of light provided by a light source according to embodiments of the present disclosure.
FIGS. 15 to 17 are diagrams illustrating examples of a backlight unit according to an embodiment of the present disclosure.
FIG. 18 is a diagram illustrating an example of a display device according to an embodiment of the present disclosure.
FIG. 19 is a diagram illustrating an example of a spectrum of light provided by a display device according to an embodiment of the present disclosure.

### Mode for the Invention

Hereinafter, embodiments disclosed in this specification will be described in detail with reference to the accompanying drawings. The same or similar components are assigned the same reference numbers regardless of reference numerals, and redundant description thereof will be omitted.

In addition, the connection, arrangement, and shape of the configurations disclosed below are merely representative examples for understanding the drawings, and may be replaced with other structures, materials, manufacturing processes, dimensions, and combinations that achieve the same or similar functions.

The suffixes "module" and "unit" (or "part") for components used in the following description are given or used interchangeably in consideration of only the ease of writing the specification, and do not have distinct meanings or roles by themselves.

In addition, in describing the embodiments disclosed in this specification, if it is determined that detailed descriptions of related known technologies may obscure the gist of the embodiments disclosed in this specification, the detailed description thereof will be omitted.

In addition, the accompanying drawings are only for easy understanding of the embodiments disclosed in this specification, and the technical spirit disclosed in this specification is not limited by the accompanying drawings, and it should be understood to include all changes, equivalents, or substitutes included in the spirit and technical scope of the present disclosure.

In particular, the combination of a plurality of parts shown together in the drawings is merely an example of a specific embodiment, and individual parts may be selectively applied independently of the combination relationship or replaced with other parts (e.g., the function of one part may be alternatively performed by another single part or a plurality of parts).

Terms including ordinal numbers such as first, second, etc., may be used to describe various components, but the components are not limited by the terms. The above terms are used only for the purpose of distinguishing one component from another component.

Ordinal notation does not imply the number of parts or an essential order, and may be replaced by any other part performing the same function.

When a component is referred to as being "connected" or "coupled" to another component, it should be understood that it may be directly connected or coupled to the other component, but other components may exist in between.

On the other hand, when a component is referred to as being "directly connected" or "directly coupled" to another component, it should be understood that no other component exists in between.

In addition, connection, coupling, fastening, and bonding may be implemented by any means among mechanical (e.g., screw, rivet, clip, latch, rib), adhesion/bonding (e.g., double-sided tape, adhesive layer), elastic fitting, magnetism, melting/welding, or combinations thereof, and separate members such as intermediate brackets/reinforcing plates/spacers may be interposed as necessary.

Singular expressions include plural expressions unless the context clearly indicates otherwise.

In the present application, terms such as "comprises" or "have" are intended to designate the presence of features, numbers, steps, operations, components, parts, or combinations thereof described in the specification, but should be understood as not precluding the possibility of the presence or addition of one or more other features, numbers, steps, operations, components, parts, or combinations thereof.

The term "comprise" is open-ended and does not exclude additional elements, layers, or steps, and "may be configured" means an optional configuration.

Unless a specific configuration is limited to being "essential", it may be selectively included or replaced with a functionally equivalent means.

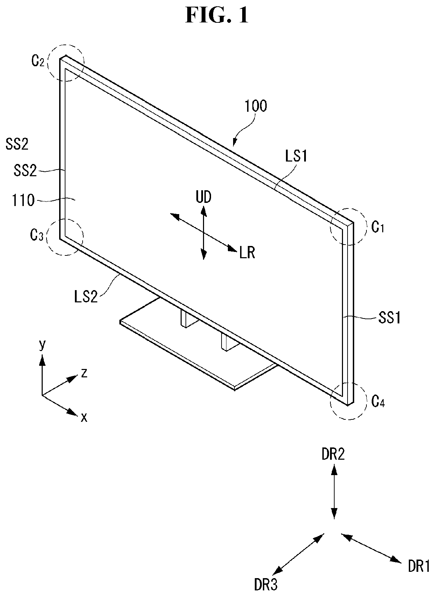

Referring to FIG. 1, the display device may include a first long side (LS1), a second long side (LS2) opposite to the first long side (LS1), a first short side (SS1) adjacent to the first long side (LS1) and the second long side (LS2), and a second short side (SS2) opposite to the first short side (SS1).

It is possible to refer to the first short side area (SS1) as a first side area, the second short side area (SS2) as a second side area opposite to the first side area, the first long side area (LS1) as a third side area adjacent to the first side area and the second side area and located between the first side area and the second side area, and the second long side area (LS2) as a fourth side area adjacent to the first side area and the second side area, located between the first side area and the second side area, and opposite to the third side area.

Although the lengths of the first and second long sides (LS1, LS2) are illustrated and described as being longer than the lengths of the first and second short sides (SS1, SS2) for convenience of explanation, a case where the lengths of the first and second long sides (LS1, LS2) are approximately equal to the lengths of the first and second short sides (SS1, SS2) may also be possible.

Terms regarding directions, areas, and surfaces (up/down/left/right, long side/short side, front/rear, etc.) are merely for the convenience of the coordinate system and may be interpreted corresponding to an arbitrary reference direction regardless of the installation posture (including horizontal/vertical/inclined, pivot rotation) of the product.

Therefore, a configuration described as being arranged in a specific direction may be modified to be arranged in another direction.

Hereinafter, a first direction (DR1) may be a direction parallel to the long sides (LS1, LS2) of the display panel 110, and a second direction (DR2) may be a direction parallel to the short sides (SS1, SS2) of the display panel 110.

A third direction (DR3) may be a direction perpendicular to the first direction (DR1) and/or the second direction (DR2).

The first direction (DR1) and the second direction (DR2) may be collectively referred to as a horizontal direction.

In addition, the third direction (DR3) may be referred to as a vertical direction.

The definition of directions does not limit the functions of the components, and the positions and directions may be freely changed according to design choices within a range that achieves the same function.

A side on which the display device displays an image may be referred to as a forward direction or a front side (or front surface).

When the display device displays an image, a side on which the image cannot be observed may be referred to as a rearward direction or a rear side (or rear surface).

When viewing the display from the front or the front side, the first long side (LS1) side may be referred to as an upper side or an upper surface.

The second long side (LS2) side may be referred to as a lower side or a lower surface.

The first short side (SS1) side may be referred to as a right side or a right surface, and the second short side (SS2) side may be referred to as a left side or a left surface.

The first long side (LS1), the second long side (LS2), the first short side (SS1), and the second short side (SS2) may be referred to as edges of the display device.

Also, points where the first long side (LS1), the second long side (LS2), the first short side (SS1), and the second short side (SS2) meet each other may be referred to as corners.

For example, a point where the first long side (LS1) and the first short side (SS1) meet may be a first corner (C1), a point where the first long side (LS1) and the second short side (SS2) meet may be a second corner (C2), a point where the second short side (SS2) and the second long side (LS2) meet may be a third corner (C3), and a point where the second long side (LS2) and the first short side (SS1) meet may be a fourth corner (C4).

A direction from the first short side (SS1) toward the second short side (SS2) or a direction from the second short side (SS2) toward the first short side (SS1) may be referred to as a left-right direction (LR).

A direction from the first long side (LS1) toward the second long side (LS2) or a direction from the second long side (LS2) toward the first long side (LS1) may be referred to as an up-down direction (UD).

The edge/corner/direction classification is for describing the appearance, and is equally applicable to various external designs such as bezel-less, round corner, and curved panels.

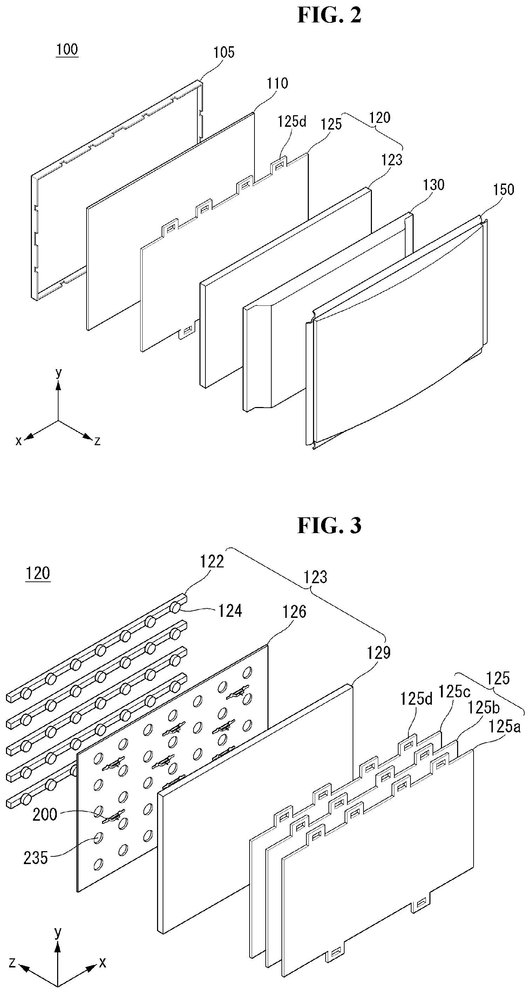

Referring to FIG. 2, a front cover 105 may cover the edges of the display panel 110.

The front cover 105 may be formed of any material among metal/resin/composite material, for example, and may perform one or more functions of edge protection, light shielding (suppression of external light inflow and internal light leakage), imparting mechanical rigidity, and providing a panel alignment reference.

The above functions may be selectively implemented by a separate bezel member, an adhesive tape, a frame protrusion, a sealing gasket, or the like instead of, or in parallel with, the front cover.

That is, even if the front cover is absent, the same or similar functions can be achieved by other configurations.

The display panel 110 is provided on the front surface of the display device 100 and may display an image.

The display panel 110 may display an image by outputting RGB (red, green, or blue) for each pixel at a timing with respect to a plurality of pixels.

The display panel 110 may be divided into an active area where an image is displayed and a de-active area (or inactive area) where an image is not displayed.

The display panel 110 may include a front substrate and a rear substrate facing each other with a liquid crystal layer interposed therebetween.

The specific structure of the panel (e.g., LCD/µLED/OLED/Plasma) may vary depending on the application example, and the optical and mechanical configuration of the present specification may be designed to provide light control and support functions regardless of the panel type.

The front substrate may include a plurality of pixels composed of red (R), green (G), and blue (B) sub-pixels.

The front substrate may output light corresponding to red, green, or blue colors according to a control signal.

The rear substrate may include switching elements. The rear substrate may switch pixel electrodes.

For example, the pixel electrode may change the molecular arrangement of the liquid crystal layer according to a control signal applied from the outside. The liquid crystal layer may include liquid crystal molecules.

The liquid crystal molecules may change their arrangement corresponding to a voltage difference generated between the pixel electrode and a common electrode.

The liquid crystal layer may transmit light provided from the backlight unit 120 to the front substrate or block the light.

The panel control mechanism described above is an illustrative explanation and may be replaced by any driving method that provides the same display function.

The backlight unit 120 may be located at the rear of the display panel 110. The backlight unit 120 may include light sources.

The backlight unit 120 may be coupled to the frame 130 at the front of the frame 130.

The coupling of the backlight unit may be implemented not only by direct coupling but also by indirect coupling via an intermediate bracket, a guide panel, an adhesive layer, or a fixing clip, and may be locally supported by a separate support independent of the frame 130.

The backlight unit 120 may be driven by a full driving method or a partial driving method such as local dimming or impulsive driving.

The backlight unit 120 may include an optical sheet 125 and an optical layer 123.

The optical sheet 125 and/or the optical layer 123 may be selectively included according to system requirements (luminance, uniformity, viewing angle, color purity, etc.), or may be replaced by a single-layer or multi-layer structure providing equivalent functions (diffusion, light collection, color mixing, reflection, light guiding).

The optical sheet 125 may allow light from the light source to be evenly transmitted to the display panel 110. The optical sheet 125 may be composed of layers.

For example, the optical sheet 125 may include a prism sheet, a diffusion sheet, and the like.

The specific shape, pattern, material, thickness, number, and arrangement order of the prism/diffusion sheets may vary depending on the design, and may be replaced by other optical films performing the same function (e.g., microlens array, phase retardation film, multilayer reflective film).

The optical sheet 125 may be provided with a coupling part 125d. The coupling part 125d may be coupled to the front cover 105, the frame 130, and/or the back cover 150.

Alternatively, the coupling part 125d may be fastened to a structure formed on or coupled to the front cover 105, the frame 130, and/or the back cover 150.

Here, the coupling part 125d is not limited to specific components (e.g., front cover, frame, back cover), and may be selectively formed on any supporting or fastening structure such as an independent bracket, reinforcing rib, spacer, or adhesive layer.

In addition, the coupling part 125d may be implemented in either a detachable or permanently fastened form.

That is, the coupling part 125d may function independently without the above components.

The frame 130 may serve to support components of the display device 100. For example, a configuration such as the backlight unit 120 may be coupled to the frame 130.

The frame 130 may be composed of a metal material such as an aluminum alloy.

The material of the frame 130 is not limited to metal, and may be formed of resin, composite material, fiber-reinforced material, etc., and may be divided into a plurality of partial frames/support bars/corner brackets instead of a single frame.

The corresponding support function may be alternatively performed by the back cover 150 or a separate housing.

The back cover 150 may be located at the rear surface or the rear of the display device 100. The back cover 150 may be coupled to the frame 130 and/or the front cover 105.

For example, the back cover 150 may be an injection-molded product of a resin material.

The back cover 150 may perform one or more functions among heat dissipation, electromagnetic wave shielding, mechanical protection, and blocking foreign substance inflow, and the above functions may be replaced or supplemented by other configurations such as a housing (heat sink), a shield plate, or a heat dissipation pad.

That is, even if the back cover 150 is omitted or integrated with other components, the gist of the disclosure is maintained.

Referring to FIG. 3, the backlight unit 120 may include a substrate 122, at least one light assembly 124, a reflective sheet 126 or a diffusion plate 129, and an optical sheet 125 may be located on the front side of the optical layer 123.

The above components may be selectively included according to system requirements, or their functions may be replaced by other configurations, and some elements may be omitted or integrated.

The substrate 122 may extend in a first direction and may be configured in the form of a plurality of straps spaced apart by a predetermined interval in a second direction orthogonal to the first direction.

However, this is merely an example. The substrate 122 may be implemented with any mechanical support structure such as a continuous plate shape, a grid, a rib-reinforced type, or a shape having incisions/openings.

In addition, the substrate 122 may perform one or more functions among electrical connection (power/signal), mechanical support, and providing a thermal path, and the above functions may be replaced or supplemented by a separate auxiliary support or heat dissipation member.

At least one light assembly 124 may be mounted on the substrate 122. The light assembly 124 may be implemented as any light source module such as a single chip or a package of a plurality of chips (same/different spectrum), COB (Chip On Board)/COG (Chip On Glass), or a mini/micro LED array, and a driving circuit may be disposed on the substrate 122 or a separate board.

The interval and arrangement (linear/matrix/cluster) of the light assemblies 124 may be uniform or non-uniform, and may be variable according to a local dimming zone design.

An electrode pattern for connecting an adapter and the light assembly 124 may be formed on the substrate 122.

The material, shape, and lamination of the electrode pattern vary depending on the design, and the carbon nanotube electrode is merely an example, and may be replaced by any conductive material such as copper, aluminum, silver, a transparent conductive film (ITO, IZO), or conductive ink.

In addition, any board type such as a flexible board (FPC/RFPCB), a ceramic board, or a metal core board may be applied.

The substrate 122 may be composed of at least one of polyethylene terephthalate (PET), glass, polycarbonate (PC), and silicon.

The above materials are merely examples, and any substrate material such as metal, resin, composite material, or ceramic may be applied.

Also, in addition to the case implemented as a "PCB (Printed Circuit Board)", it may be replaced with other substrate structures considering flexible/lightweight/high heat dissipation/insulating characteristics.

The light assemblies 124 may be disposed on the substrate 122 with a predetermined interval in the first direction.

However, the interval and pitch may be arbitrarily set according to design goals (luminance uniformity, color mixing distance, local dimming resolution), and some portions may be arranged at different intervals.

The effective light emitting area of the light assembly 124 may be relatively larger or smaller than the width and length of the substrate.

The light assembly 124 may be a Light Emitting Diode (LED) chip or a light emitting diode package including at least one light emitting diode chip.

The light source may be any combination of white LEDs or colored LEDs (e.g., R/G/B), and may be used in combination with a multicolor combination such as RGBCY/WRGB or a narrow-band phosphor/quantum dot (QD) conversion structure as necessary.

The reflective sheet 126 may cover the substrate 122. The reflective sheet 126 may be located on an area excluding the area where the light assembly 124 of the substrate 122 is formed.

The reflective sheet 126 may be provided with a plurality of through-holes 235. The light assembly 124 may be inserted into the through-hole 235 of the reflective sheet 126.

Here, the shape, number, arrangement, and dimensions of the through-holes 235 may be arbitrarily changed according to the design, and light extraction or light recirculation (light recycling) may be implemented using local thinning/grooves/dome shapes/reflectance control coating/micro-patterning instead of the through-holes.

In addition, the reflective sheet 126 may be composed of a single-layer or multi-layer reflective structure (metal film/metal oxide/multi-layer polymer), and the same function may be achieved through a gap with the light assembly 124 without the insertion structure of the through-hole.

The reflective sheet 126 may reflect light emitted from the light assembly 124 toward the optical sheet 125. Also, the reflective sheet 126 may reflect light reflected from the diffusion plate 129 again.

The main functions of the reflective sheet 126 are suppressing downward leakage light and improving luminance and efficiency through upward light recirculation, and this function may be generally achieved by a high-reflection material, roughness control, scattering particle-containing coating, or the like.

The reflective sheet may be omitted as necessary, or may be replaced by high-reflection processing of the surface of the light guide panel or the housing.

The reflective sheet 126 may include at least one of metal and metal oxide, which are reflective materials.

For example, the reflective sheet 126 may include a metal and/or a metal oxide having high reflectance, such as at least any one of aluminum (Al), silver (Ag), gold (Au), and titanium dioxide (TiO₂).

Resin may be deposited on the light assembly 124 and/or the reflective sheet 126. The resin may serve to diffuse light emitted from the light assembly 124.

The diffusion plate 129 may diffuse light emitted from the light assembly 124 upward. Here, "resin" encompasses any medium providing a light diffusion function (e.g., resin matrix with diffusion beads/inorganic filler, micro-uneven surface, viscoelastic layer, etc.), and may be formed by various processes such as deposition, coating, lamination, inkjet, and embossing.

The diffusion function may be implemented by being distributed and arranged in one or more of the diffusion plate 129, the optical sheet 125, or the light guide panel (surface pattern).

The optical sheet 125 may be located in front of the diffusion plate 129. The rear surface of the optical sheet 125 may be in close contact with the diffusion plate 129, and the front surface of the optical sheet 125 may be in close contact with the rear surface of the display panel 110 (see FIG. 1).

However, the number of layers, arrangement order, and close contact of the optical sheet 125 may vary depending on the design, and a single sheet may be designed to perform two or more functions among diffusion, light collection, color mixing, and phase control.

In addition, the optical sheet 125 may be directly or indirectly supported using a frame/guide/adhesive layer/clip, and some sheets may be omitted if necessary.

The optical sheet 125 may include at least one or more sheets. Specifically, the optical sheet 125 may include one or more prism sheets and/or one or more diffusion sheets.

Parameters such as the number, pattern period, peak angle, and material refractive index of the prism/diffusion sheets may be adjusted according to the target luminance, viewing angle, and uniformity, and may be replaced by functionally equivalent films such as microlens arrays, multilayer reflective films, and phase retardation films.

A plurality of sheets included in the optical sheet 125 may be in a state of being bonded and/or in close contact.

The optical sheet 125 may be composed of a plurality of sheets having different functions.

For example, the optical sheet 125 may include first to third optical sheets 125a to 125c.

For example, the first optical sheet 125a may be a diffusion sheet, and the second and third optical sheets 125b and 125c may be prism sheets.

The number and/or positions of the diffusion sheets and prism sheets may be changed.

The diffusion sheet may prevent light coming from the diffusion plate from being partially concentrated, thereby making the distribution of light more uniform.

The prism sheet may condense light coming from the diffusion sheet and provide the light to the display panel 110.

The coupling part 125d may be formed on at least one of sides or edges of the optical sheet 125.

The coupling part 125d may be formed on at least one of the first to third optical sheets 125a to 125c.

The coupling part 125d may be formed on a long side of the optical sheet 125. The coupling part 125d formed on the first long side and the coupling part 125d formed on the second long side may be asymmetric.

For example, this means that the positions and/or numbers of the coupling parts 125d on the first long side and the coupling parts 125d on the second long side may be different from each other.

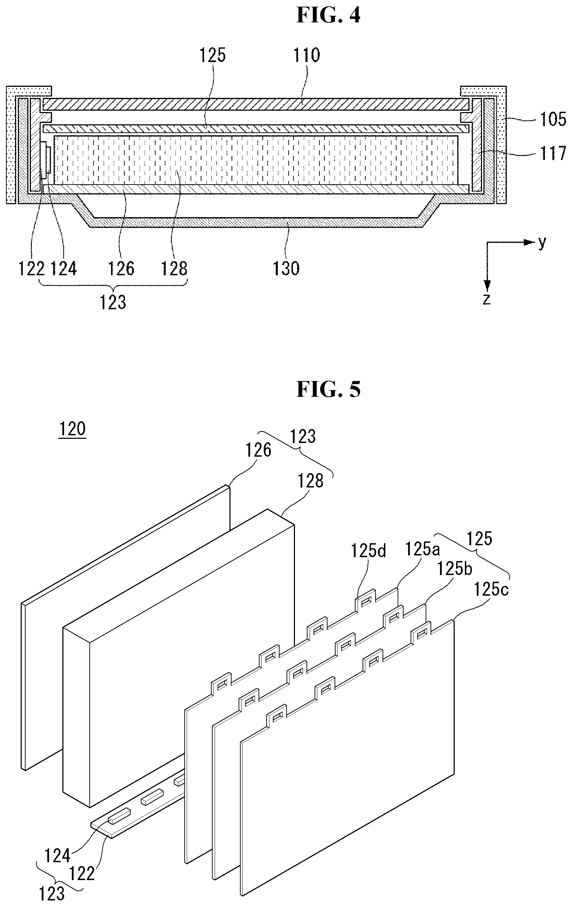

Referring to FIGS. 4 and 5, the optical layer 123 may include a substrate 122, a reflective sheet 126, a light assembly 124, and/or a light guide panel 128.

The optical layer 123 might not include some of these configurations. Also, the components may be directly or indirectly coupled to each other, and may be supported and fixed via an intermediate bracket, an adhesive layer, a spacer, a clip, or the like as necessary.

The optical layer 123 may be located in front of the frame 130. The optical layer 123 may be located between the frame 130 and the display panel 110. The optical layer 123 may be supported by the frame 130.

However, the support of the optical layer 123 is not limited to the frame 130, and part or all thereof may be supported by any support such as a guide panel, a separate housing, a reinforcing rib, or a back cover, and even if some configurations are absent, equivalent functions may be realized by other configurations.

The substrate 122 may be located inside the frame 130. The substrate 122 may be coupled to a first guide panel 117.

The substrate 122 may be directly coupled to the first guide panel 117. For example, the substrate 122 may be coupled to at least one of the first guide panel 117, the frame 130, and the front cover 105.

The front cover 105 may be referred to as a top case. Here, "coupling" includes any means such as screws, rivets, latches, ribs, adhesion/bonding, elastic fitting, and magnetic fastening, and may interpose an intermediate member.

In addition, the substrate 122 may be independently supported by a separate support even in the absence of the above parts.

The substrate 122 may be located adjacent to side surfaces of the reflective sheet 126 and/or the light guide panel 128. That is, it means that the front surface of the substrate 122 may face the optical layer 123.

The substrate 122 and the reflective sheet 126 and/or the light guide panel 128 may be spaced apart by a predetermined interval.

The substrate 122 may be located on one side of other components of the optical layer 123. The light assembly 124 or light assemblies 124 may be mounted on the substrate 122.

An electrode pattern for connecting an adapter and the light assembly 124 may be formed on the substrate 122.

For example, a carbon nanotube electrode pattern for connecting the light assembly 124 and the adapter may be formed on the substrate 122.

For example, the substrate 122 may be a Printed Circuit Board (PCB). However, the electrode and board configurations are merely examples, and may be replaced by any board such as FPC/RFPCB/ceramic/metal core/composite material board and any electrode material such as copper, aluminum, silver, transparent conductive film, or conductive ink.

The light assemblies 124 may be disposed on the substrate 122 with a predetermined interval. Light provided from the light assembly 124 may be transmitted to the light guide panel 128.

The arrangement interval and pattern may be uniform or non-uniform, and may be set differently for each section in consideration of local dimming, heat dispersion, color mixing distance, and the like.

The light assembly 124 may be a Light Emitting Diode (LED) chip or a light emitting diode package including at least one light emitting diode chip.

The light source included in the light assembly 124 may be a Chip On Board (COB) type. The COB type may be a form in which an LED chip, which is a light source, is directly coupled to the substrate 122.

However, this is merely an example, and alternative light source modules such as a package type, flip chip, COG, micro LED array, or light conversion layer (QD/phosphor) integrated module may be applied.

The light guide panel 128 may totally reflect light incident from the light assembly 124. The reflective sheet 126 may be located at the rear of the light guide panel 128.

The reflective sheet 126 may reflect light provided from the light assembly 124 and coming out of the light guide panel 128. The reflective sheet 126 may reflect light flowing out from the light guide panel 128 back to the light guide panel 128.

Any light control pattern such as prism/lens/diffuse reflection/dot/grid/fine unevenness may be formed on the upper and lower surfaces of the light guide panel 128, and the shape, pitch, depth, and orientation of the pattern may be adjusted according to target luminance, uniformity, and viewing angle.

In the absence of a pattern, a sheet/coating/surface texture can perform an equivalent function.

An air gap may be formed between the light guide panel 128 and the optical sheet 125. The air gap is an example for tuning front light distribution, color mixing, luminance uniformity, and moiré suppression, and its presence/absence and gap size are design choices.

Instead of the air gap, partial or full coupling may be performed by an optical adhesive layer (OCA), a low refractive index gap layer, adhesive dots, or the like.

The optical sheet 125 may be located in front of the light guide panel 128. The rear surface of the optical sheet 125 may face the light guide panel 128, and the front surface of the optical sheet 125 may face the rear surface of the display panel 110.

Facing/close contact is not essential, and a gap or a local gap may be provided, and various fastening methods such as adhesion/bonding/lamination/clip support may be applied between layers.

Some sheets may be omitted or integrated.

The optical sheet 125 may include at least one sheet. The optical sheet 125 may include one or more prism sheets and/or one or more diffusion sheets.

A plurality of sheets included in the optical sheet 125 may be in a state of being adhered and/or in close contact with each other.

For example, the optical sheet 125 may include first to third optical sheets 125a to 125c.

The first optical sheet 125a may be a diffusion sheet, and the second and third optical sheets 125b and 125c may be prism sheets.

The number and/or positions of the diffusion sheets and prism sheets may be changed.

The diffusion sheet may prevent light coming from the light guide panel 128 from being partially concentrated, thereby making the distribution of light uniform.

The prism sheet may condense light coming from the diffusion sheet and provide the light toward the display panel 110.

The coupling part 125d may be formed at an edge of the optical sheet 125. The coupling part 125d may be formed on at least one of the first to third optical sheets 125a to 125c.

The coupling part 125d may be formed on a long side edge of the optical sheet 125. The coupling part 125d on the first long side and the coupling part 125d on the second long side may be asymmetric.

For example, the positions and/or numbers of the coupling parts 125d on the first long side and the coupling parts 125d on the second long side may be different.

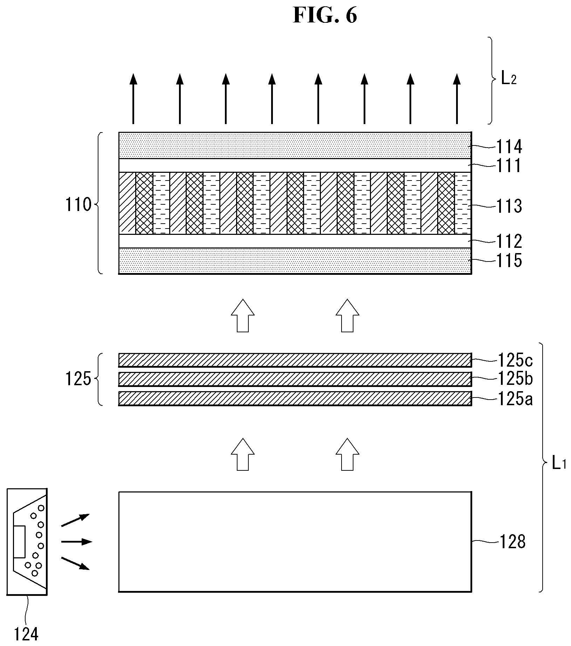

Referring to FIG. 6, the light assembly 124 may provide light to the light guide panel 128, and light reflected and/or refracted by the light guide panel 128 may be directed toward the optical sheet 125.

Light dispersed and/or condensed by the optical sheet 125 may be provided to the display panel 110.

At this time, although the paths of light are divided into L1 to L4 for convenience of description, these are merely exemplary names, and in an actual system, various paths such as multiple reflections, multiple scattering, partial absorption, and accumulation of total internal reflection may be superimposed and implemented.

Therefore, the presence or order of a specific path does not limit the gist of the disclosure.

The display panel 110 may display an image using such light.

According to FIG. 6, if light provided from the light assembly 124 before passing through the display panel 110 is referred to as L1, and light having passed through the display panel 110 is referred to as L2, L1 and L2 may have different light spectrums.

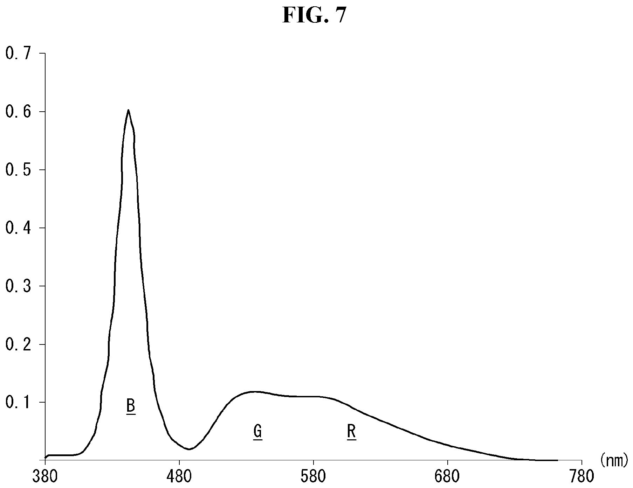

FIG. 7 may be an example of the spectrum of L1. Referring to FIG. 7, the x-axis represents the wavelength of light (nm), and the y-axis represents the intensity of light.

B may be the intensity or distribution of blue-based light, G may be the intensity or distribution of green-based light, and R may be the intensity or distribution of red-based light.

The spectrum shown here is a normalized example for facilitating understanding, and the peak wavelength, full width at half maximum (FWHM), and relative intensity may vary within a design range depending on the phosphor mixing ratio, encapsulant composition/thickness, LED bin, driving current/temperature, and the like.

In addition, although auxiliary peaks may be formed due to the presence of additional or auxiliary light emitting components, this does not limit the gist of the disclosure.

The light assembly 124 (see FIG. 6) may include an LED as a light source. The light assembly 124 may emit white light.

In this case, the light assembly 124 emitting white light may be one in which a green or red-based phosphor is packaged with a blue LED.

The light source having such a configuration may provide light (L1) having the wavelength and/or intensity shown in FIG. 7.

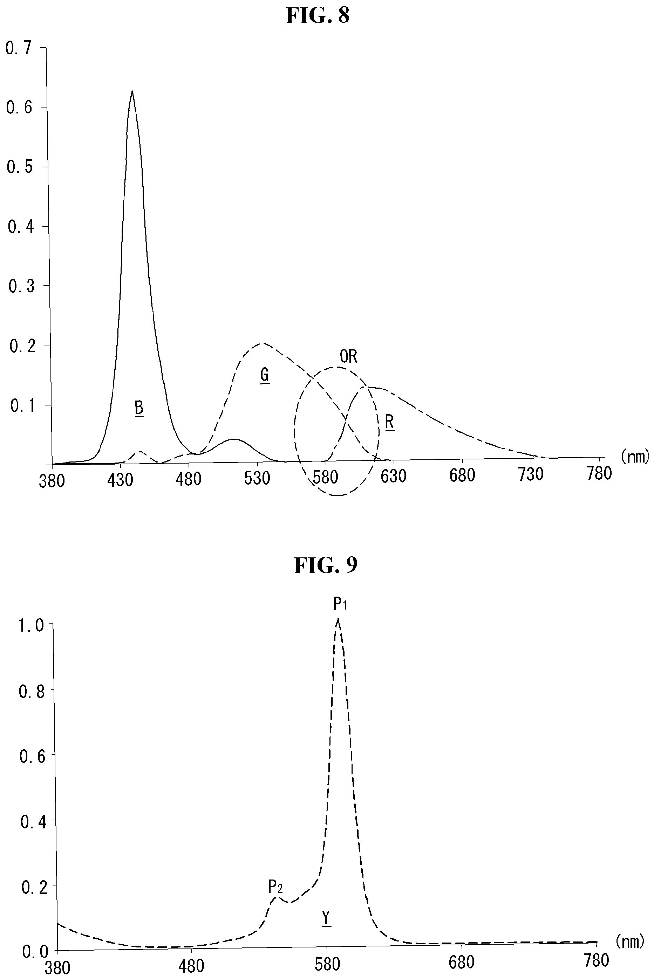

FIG. 8 may be an example of the spectrum of L2. Referring to FIG. 8, which may be an example of the spectrum of light provided to the outside from the display panel 110 (see FIG. 6), for example, implementing an image, it can be seen that while the blue-based light (B) has high color purity, the green-based light (G) and the red-based light (R) form an overlapping region (OR) where they overlap each other, so that the purity of these colors is not high.

The fact that the color purity is not high may mean that color expression capability is degraded, which means that it is difficult to implement high image quality.

The light absorption function of the present disclosure is intended to increase the separation of the G/R boundary through selective subtraction of the overlapping region (OR), and consequently improve color purity and color mixing characteristics.

At this time, the "overlapping region" may be defined as a sum of relative spectrums or a crossing index for a specific wavelength section, and specific values may vary depending on system specifications.

FIG. 9 is a diagram illustrating an example of a spectrum of light absorbed by a light absorbing layer or a light absorbing part according to an embodiment of the present disclosure.

The light absorbing part may include an absorbent or an absorbent material. For example, the absorbent or absorbent material may be Tetra Aza Porphyrin (see Chemical Formula below).

However, it is not limited to a specific chemical formula, and a functionally equivalent material (including organic/inorganic dyes and pigments) exhibiting selective absorption characteristics in the above wavelength band may be applied.

The selection criteria at this time may be determined by system requirements such as target overlap suppression amount, light resistance/heat resistance, process suitability, and environmental stability.

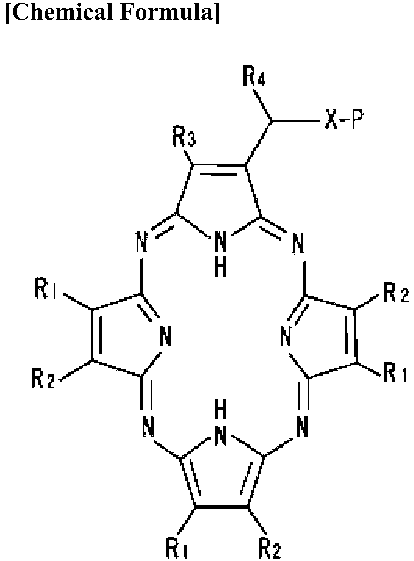

Referring to FIG. 9, Figure 9 illustrates an example of an absorption spectrum of the light absorbing part (including the absorbent material). The absorption wavelength may appear mainly in a wavelength band corresponding to yellow to orange series (e.g., about 540 to 610 nm), and may have one or more (at least one) local peaks.

For example, the band of wavelengths of light absorbed by the light absorbing part may absorb light between 540 nm and 610 nm.

A first peak (P1) value may be, for example, in a 595 nm wavelength region. A second peak (P2) value may be, for example, in a 543 nm wavelength region.

Light energy absorbed by the light absorbing part may be consumed by rotation or vibration of electrons.

As another example, the band of wavelengths of light absorbed by the light absorbing part may be a 570 nm to 610 nm wavelength region.

However, the peak position and absorption bandwidth may shift or change within a range of picometer(pm) (e.g., several to tens of nm) depending on the type/concentration of the absorbent material, the refractive index/dispersion of the medium (binder/coating matrix), layer thickness, thermal/optical history, etc., and may be implemented in any shape among a single peak or multiple peaks.

In addition, absorption may be implemented in a continuous band or sub-band selective form.

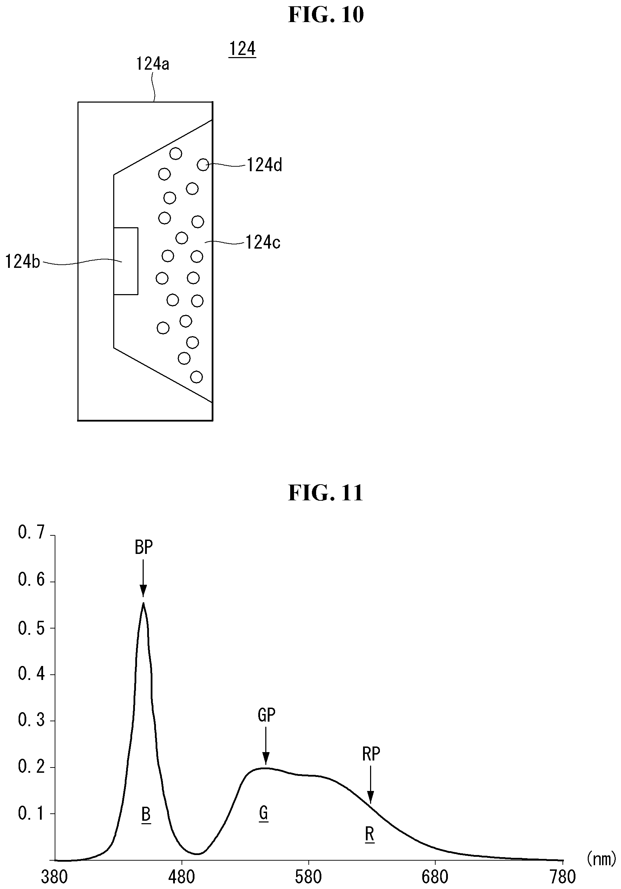

Referring to FIG. 10, the light assembly 124 may include a housing 124a, a light source 124b, an encapsulant 124c, and phosphors 124d.

The housing 124a provides an accommodation space, and the accommodation space may be formed to be concavely recessed. The light source 124b may be mounted in the accommodation space of the housing 124a.

For example, the light source 124b may be a blue LED. The encapsulant 124c may include phosphors 124d.

The encapsulant 124c may fill the accommodation space of the housing 124a in a liquid state mixed with the phosphors 124d and be cured.

Here, the specific shape of the housing (including the concave accommodation space), the selection of the light source (blue LED), and the dispersion in the encapsulant are merely examples for facilitating understanding, and the light assembly 124 may be implemented in any structure such as a package type, COB, COG, membrane lens integrated type, or micro LED array.

In addition, the encapsulant 124c may be implemented with an optically transparent medium (e.g., siloxane-based, epoxy-based, fluorine-based, etc.), and the refractive index, viscosity, and thermal/optical stability can be designed according to target specifications.

Therefore, the phosphors 124d may be distributed on the upper part of the light source 124b. The phosphors 124d may be in a powder form. The phosphors 124d may be green-based or red-based.

The red-based phosphor 124d may appear yellow-based to the naked eye, but may emit red-based light. For example, the green-based phosphor 124d may be β-SiAlON.

For example, the red-based phosphor may be KSF (K2SiF6:Mn4+). As another example, the red-based phosphor may include KSF (K2SiF6:Mn4+) and a nitride.

The above phosphor examples are not limited to specific compositions, and may be replaced by functionally equivalent conversion materials (including organic/inorganic phosphors and pigments) that satisfy conversion efficiency, full width at half maximum (FWHM), and thermal/optical stability in a target wavelength band.

In addition, the phosphor composition, particle size, and surface treatment may be adjusted according to the specifications and driving conditions of the blue or other base light source.

Regarding the mixing ratio, for example, the ratio of the green-based phosphor 124d may be 42% to 62%, and the ratio of the red-based phosphor 124d may be 37% to 57%.

The phosphors 124d may be mixed to sum to 100% within the above ratio ranges.

Regarding the content ratio, for example, if the green-based phosphor 124d is 1, the content ratio of the red-based phosphor 124d thereto may be in a range of 0.71 to 0.93.

The content ratio of the phosphors 124d relative to the encapsulant 124c may be, for example, 4.2% to 6.8%.

These numerical values and ranges are example values, and may be adjusted in consideration of manufacturing tolerances and environmental conditions (temperature, current, lapse of time) according to target performance (e.g., color gamut, color purity, luminance, uniformity, thermal stability).

In addition, the above ratios may be converted and applied based on other criteria such as weight ratio/volume ratio/mole ratio, and may be set differently for each region for a single or multiple phosphor system.

Accordingly, the light assembly 124 may provide white light. The white point (color temperature/coordinates) may be set by the phosphor composition/thickness/distribution, encapsulant refractive index, and light source driving conditions, and a driving algorithm (current distribution, PWM, temperature compensation) may be selectively applied to correct a shift according to lapse of time/temperature.

FIGS. 11 to 14 are diagrams illustrating examples of spectrums of light provided by a light assembly having the phosphors described with reference to FIG. 10.

Referring to FIG. 11, based on the intensity (BP: 100%) of the blue-based light (B), the intensity (GP) of the green-based light (G) may be 36%, and the intensity (RP) of the red-based light (R) may be 25%.

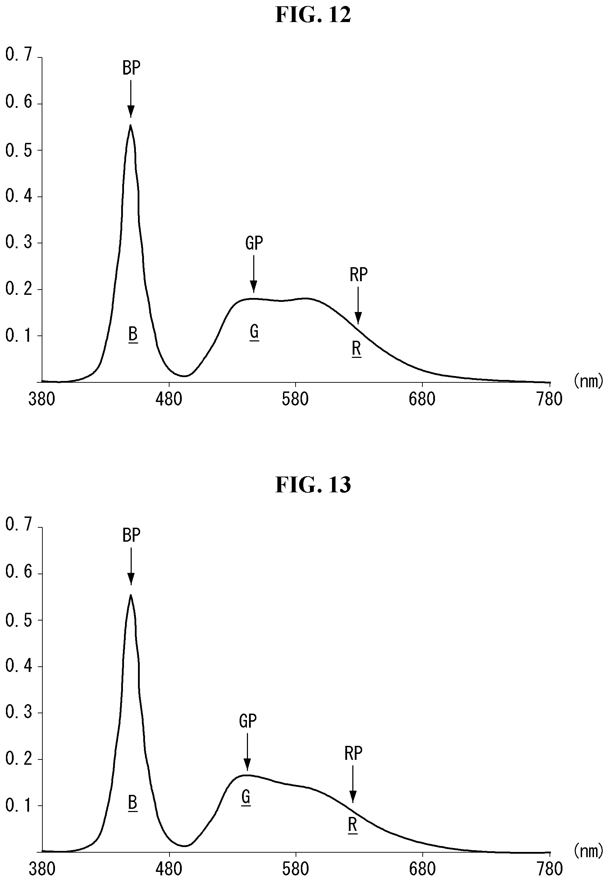

Referring to FIG. 12, based on the intensity (BP: 100%) of the blue-based light (B), the intensity (GP) of the green-based light (G) may be 33%, and the intensity (RP) of the red-based light (R) may be 26%.

Referring to FIG. 13, based on the intensity (BP: 100%) of the blue-based light (B), the intensity (GP) of the green-based light (G) may be 30%, and the intensity (RP) of the red-based light (R) may be 19%.

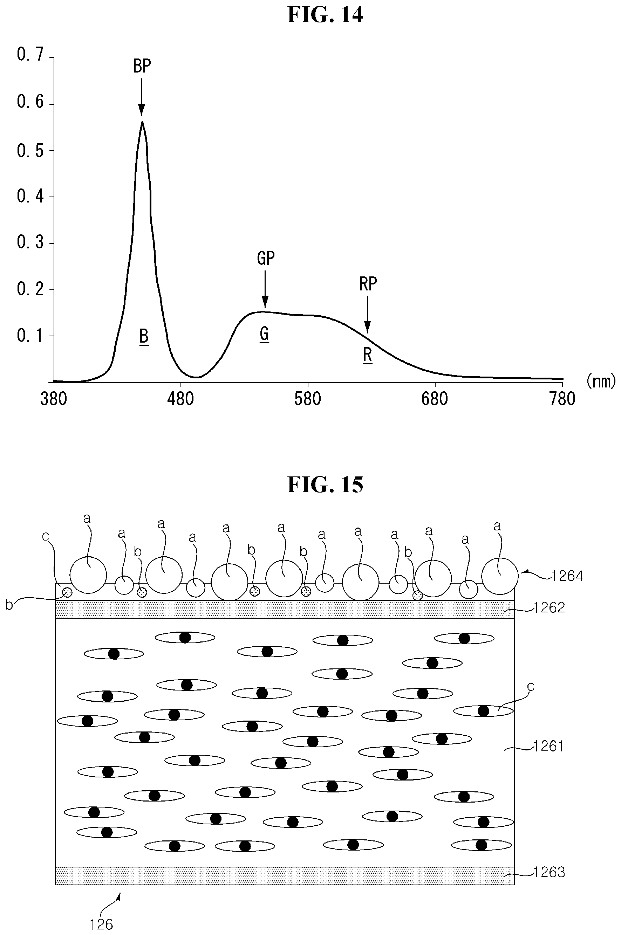

Referring to FIG. 14, based on the intensity (BP: 100%) of the blue-based light (B), the intensity (GP) of the green-based light (G) may be 28%, and the intensity (RP) of the red-based light (R) may be 20%.

The relative intensity (%) may vary according to a normalization reference (e.g., maximum peak = 100% or integral intensity reference), and may change temporally according to LED bin/current/temperature/driving method (full driving/local dimming).

Therefore, the values in FIGS. 11 to 14 are representative examples, and relative intensity, peak position, and full width at half maximum may vary within a design range as long as the same functional effect (color gamut expansion, color purity improvement) is achieved.

The red-based phosphor 124d may appear yellow-based to the naked eye, but may emit red-based light.

Since such an external color depends on observation illuminance, background, and observer conditions, light emission characteristics may be defined and evaluated by physical quantities such as spectrum peak wavelength, full width at half maximum, and quantum efficiency.

Referring to FIG. 15, the reflective sheet 126 may include a plurality of layers 1261, 1262, and 1263. The reflective sheet 126 may include a bottom layer 1263, a middle layer 1261, and/or a top layer 1262.

The bottom layer 1263 may be formed on a lower surface of the middle layer 1261. The top layer 1262 may be formed on an upper surface of the middle layer 1261. The middle layer 1261 may include cavities (C).

The cavities (C) may be formed in the middle layer 1261 through a foaming process. The reflective sheet 126 including the bottom layer 1263, the middle layer 1261, and/or the top layer 1262 may be referred to as a reflective film 126.

For example, the reflective film 126 may include a PET material. The multi-layer structure is merely an example, and the reflective sheet 126 may be implemented in any form among a single layer or multiple layers, a laminated type, or an integrally molded type.

In addition, the material of the reflective film is not limited to PET and may be replaced by other polymers, composite materials, multi-layer polymer stacks, etc.

The top layer 1262 and/or the bottom layer 1263 may have a smooth outer surface. The top layer 1262 and/or the bottom layer 1263 might not include cavities (C).

The middle layer 1261, the top layer 1262, and/or the bottom layer 1263 may be integrally formed. The middle layer 1261, the top layer 1262, and/or the bottom layer 1263 may be laminated to each other.

Boundaries between the middle layer 1261, the top layer 1262, and/or the bottom layer 1263 might not be clearly identified. For example, the thickness of the reflective sheet 126 may be 225 micrometers (µm).

The thickness of the top layer 1262 or the thickness of the bottom layer 1263 may be smaller than the thickness of the middle layer 1261.

For example, the size of the cavities (C) formed in the middle layer 1261 may be 0.4 to 1.2 micrometers (µm).

For example, the reflective sheet 126 may have a reflectance of 95 to 98 percent. As another example, the reflective sheet 126 may have a reflectance of 96.6 percent.

The above-described thickness, cavity size, and reflectance numerical values are representative examples, and may be adjusted within a design range depending on material composition, foaming conditions, surface roughness, presence or absence of coating, etc.

Also, the reflectance may vary depending on the measurement wavelength, incident angle, and polarization state.

A light absorbing layer 1264 may be laminated on the reflective sheet 126. The light absorbing layer 1264 may be referred to as a coating layer 1264. The light absorbing layer 1264 may be coated on the top layer 1262 of the reflective sheet 126.

The light absorbing layer 1264 may include an absorbent material (b) (see FIG. 9 and the above-described chemical formula).

For example, the absorbent material (b) may be 0.0003 wt% to 0.0005 wt% of the light absorbing layer 1264.

Including the middle layer 1261, the top layer 1262, the bottom layer 1263, and the light absorbing layer 1264 may also be referred to as the reflective sheet 126.

The light absorbing function may be formed on either one or both of the top or bottom sides of the reflective sheet 126 and may be implemented in any shape such as a continuous film, a dot/line pattern, or a gradation coating.

In addition, the light absorbing function may be provided as a separate carrier film to be separately coupled to the reflective sheet 126.

The light absorbing layer 1264 may include beads (a). The beads (a) may be 40 micrometers (µm).

The beads (a) may have a normal distribution centered on a size of 40 micrometers (µm).

The beads (a) may be mixed with the absorbent material (b) and included in a base (c) of the light absorbing layer 1264. For example, the thickness of the light absorbing layer 1264 may be 20 to 40 micrometers (µm).

As another example, the thickness of the light absorbing layer 1264 may be 30 micrometers (µm).

The beads (a) may scatter light. Light may be diffusely reflected by the beads (a).

The existence of the beads (a) itself is optional, and the material (organic/inorganic), refractive index, particle diameter, and distribution (single/multiple mode) may vary depending on the design.

In addition, even in the absence of beads, an equivalent scattering/diffuse reflection function can be implemented by surface roughness control, fine patterns, dispersed particle-containing coating, etc.

The thickness of the light absorbing layer 1264 may also be adjusted within a design range depending on process and material characteristics.

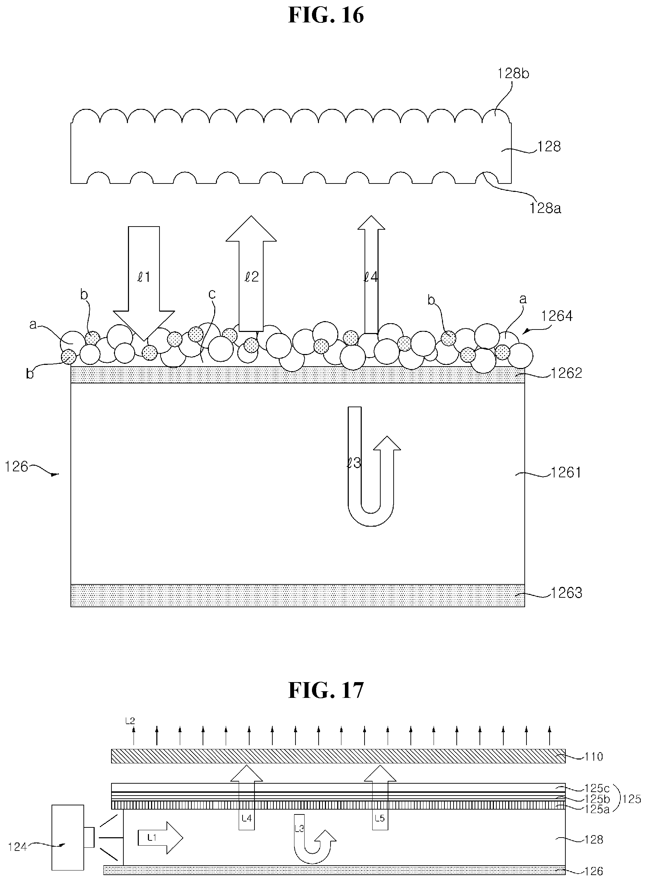

Referring to FIG. 16, the light guide panel 128 may have an upper surface 128b and a lower surface 128a. For example, the upper surface 128b of the light guide panel 128 may be a convex lens pattern.

For example, the lower surface 128a of the light guide panel 128 may be a concave lens pattern or an engraved dot pattern.

As another example, the upper surface 128b of the light guide panel 128 may be a prism pattern, and the lower surface 128a of the light guide panel 128 may be a reflective pattern.

Light incident from the light assembly 124 (see FIG. 6) to the light guide panel 128 may be totally reflected through the light guide panel 128 and may exit to the outside through the lower surface 128a of the light guide panel 128.

Light (l1) exiting from the light guide panel 128 toward the reflective sheet 126 through the lower surface 128a of the light guide panel 128 may be referred to as first light (11).

The first light (11) may be directed toward the coating layer 1264 formed on the top layer 1262 of the reflective sheet 126. A part of the first light (11) may be reflected by the coating layer 1264.

Another part of the first light (11) may pass through the coating layer 1264 and be reflected by the reflective sheet 126. Light (l2) reflected by the coating layer 1264 may be referred to as second light (l2).

The second light (l2) may be re-incident on the light guide panel 128. Light (l3) passing through the coating layer 1264 and directed into the reflective sheet 126 may be referred to as third light (l3).

The third light (l3) may be reflected by the reflective sheet 126. The third light (l3) may be reflected by at least one of the top layer 1262, the middle layer 1261, or the bottom layer 1263.

The third light (l3) may pass through the coating layer 1264 and be directed toward the light guide panel 128. Light (l4) passing through the coating layer 1264 and directed toward the light guide panel 128 may be referred to as fourth light (l4).

Including at least one of the first light (l1), the second light (l2), the third light (l3), or the fourth light (l4) may be referred to as light cycling.

Through light cycling, the absorbent material (b) may absorb a part of the spectrum of the light (L1) provided from the light assembly 124 (see FIG. 6).

The spectrum of the light provided from the light assembly 124 (see FIG. 6) and absorbed by the absorbent material (b) is as described above.

Here, the paths divided into L1 to L4 are examples for understanding, and in actual operation, various paths such as multiple reflections, multiple scattering, partial absorption, and accumulation of total internal reflection may be superimposed.

The order, number of times, and spatial distribution of the paths may be arbitrarily changed according to the material, thickness, and surface state of the optical stack.

Referring to FIG. 17, the light guide panel 128 may be located on the reflective sheet 126. The light guide panel 128 may be laminated on the reflective sheet 126.

The optical sheet 125 may be located on the light guide panel 128. The optical sheet 125 may be laminated on the light guide panel 128.

The display panel 110 may be located opposite to the reflective sheet 126 with respect to the optical sheet 125.

Light provided from the light assembly 124 may be incident on a side surface of the light guide panel 128. The light (L1) incident on the side surface of the light guide panel 128 may be totally reflected, refracted, and scattered inside the light guide panel 128.

Light totally reflected inside the light guide panel 128 may exit to the upper surface of the light guide panel 128 toward the optical sheet 125 (L4).

Light totally reflected inside the light guide panel 128 may exit to the lower surface of the light guide panel 128 toward the reflective sheet 126 (L3).

The light (L3) exiting to the lower surface of the light guide panel 128 may be reflected by the reflective sheet 126 and may flow into the light guide panel 128 again.

Light introduced into the light guide panel 128 may be directed toward the optical sheet 125 through the upper surface of the light guide panel 128 (L5). The light (L4, L5) passing through the optical sheet 125 may be provided to the display panel 110.

The light (L2) passing through the display panel 110 may be identified at the front of the display device 100 (see FIG. 1).

Adhesion/lamination between stacks is not essential, and an air gap or a local gap may exist.

In addition, partial or full coupling by an optical adhesive layer (OCA), adhesive dots, clips, guides, etc. may be selected.

Some layers may be omitted or integrated, and the layer order may be changed to achieve the function.

The spectrum of the light (L1) provided from the light assembly 124 may be changed by light absorbed by the coating layer 1264 (see FIG. 16) formed on the reflective sheet 126.

Accordingly, the light (L2) identified at the front of the display device 100 (see FIG. 1) through the display panel 110 may have improved color reproducibility.

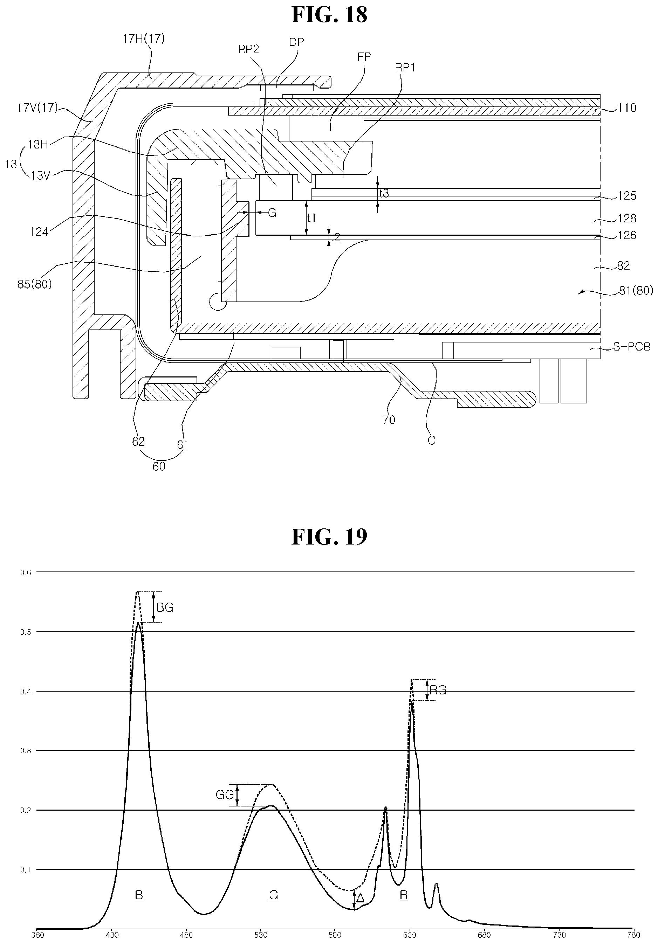

Referring to FIG. 18, the frame 60 may include a flat portion 61 and a bending portion 62. The flat portion 61 may form the front surface of the frame 60 and may be formed to be generally flat.

The bending portion 62 may be bent forward from an edge of the flat portion 61 and may extend along the edge of the flat portion 61.

The shape, material, thickness, and presence or absence of ribs (reinforcement) of the frame 60 may be arbitrarily designed within a range that achieves the functions of securing mechanical rigidity, providing component alignment references, and light shielding/protection,and may be divided into partial frames/corner brackets/reinforcing bars, etc.

In addition, the same function may be partially or wholly replaced by a back cover or a separate housing.

The housing 80 may be located on the flat portion 61. The housing 80 may be adjacent to a lower side of the frame 60. The housing 80 may include a rear part 81 and a side part 85.

The rear part 81 may be coupled or fixed to the flat portion 61. The side part 85 may be bent forward from a lower end of the rear part 81.

The housing 80 may include a protrusion 82 protruding forward from the front surface of the rear part 81. The side part 85 may protrude further forward than the protrusion 82.

The side part 85 may be located between the bending portion 62 and the protrusion 82 and may be spaced apart from the bending portion 62 and the protrusion 82.

The housing 80 may include a metal material such as aluminum (Al). The housing 80 may be referred to as a heat sink 80.

The main functions of the housing/heat sink 80 are providing a thermal path, mechanical support, and providing an alignment reference, and the material may be replaced by a graphite sheet, metal-polymer composite, ceramic, or heat pipe/vapor chamber integrated structure in addition to metal.

The presence of the protrusion 82 and the side part 85 is merely an example, and the same function may be implemented by a separate bracket/rib/spacer/pad or the like.

In addition, the housing 80 may be directly or indirectly (interposing an intermediate member) coupled to the frame 60, and the heat/support function may be achieved by other configurations even in the absence of the housing.

The guide panel 13 may include a vertical portion 13V and a horizontal portion 13H. The vertical portion 13V may extend along the bending portion 62 and may cover the outside of the bending portion 62. The horizontal portion 13H may intersect the vertical portion 13V and may cover a part of the front of the frame 60 and the housing 80.

The guide panel 13 may perform one or more functions among panel rear support, edge alignment, vibration damping, and light shielding/foreign substance blocking,and may be replaced by separate guide rails/adhesive layers/clips/latches/ribs, etc. the presence, shape, and material of the guide panel do not limit the gist of the disclosure.

The light assembly 124 may be aligned on a side surface of the light guide panel 128. A gap (G) between the light assembly 124 and the side surface of the light guide panel 128 may be 0.35 mm.

The gap (G) may be adjusted within a design range according to color mixing distance, coupling efficiency, and thermal/mechanical tolerances, and 0.35 mm is an example value. It may be implemented as "at least one" gap value or section (e.g., 0.2-0.6 mm, etc.), and different gaps may be adopted for each zone within the section.

The light guide panel 128 may be located between the horizontal portion 13H and the protrusion 82. The reflective sheet 126 may face the rear surface of the light guide panel 128. For example, a thickness (t2) of the reflective sheet 126 may be 0.255 mm.

The thickness of the reflective sheet 126 may be a thickness including the light absorbing layer 1264 (see FIG. 16).

The light guide panel 128 may be laminated on the reflective sheet 126. For example, a thickness (t1) of the light guide panel 128 may be 2 mm.

The optical sheet 125 may be disposed or laminated on the front surface of the light guide panel 128. For example, a thickness (t3) of the optical sheet 125 may be 0.41 mm.

A portion of the rear surface of the light guide panel 128 adjacent to the lower side of the light guide panel 128 may be supported by the protrusion 82.

Meanwhile, portions adjacent to the upper side, left side, and right side of the light guide panel 125 may be supported by the frame 60.

The thicknesses (t1-t3) and support methods are examples, and may be set to ranges according to optimization considering light efficiency, uniformity, rigidity, mass, and cost.

Close contact/non-contact (air gap/local gap) between stacks, partial or full coupling by an optical adhesive layer (OCA)/adhesive dot/clip may be selected, and support points (e.g., protrusion 82, frame 60) may be replaced by other supports.

The display panel 110 may face the optical sheet 125 with respect to the horizontal portion 13H. A front pad (FP) may be located between the display panel 110 and the horizontal portion 13H, and may be coupled to the horizontal portion 13H.

A first rear pad (RP1) may be located between the horizontal portion 13H and the optical sheet 125, and may be coupled to the horizontal portion 13H.

A second rear pad (RP2) may be located between the horizontal portion 13H and the light guide panel 128, and may be coupled to the horizontal portion 13H.

The number, material (foam/rubber/silicon/film/fiber, etc.), shape, and arrangement position of the pads (FP/RP1/RP2) may be arbitrarily changed within a range that achieves vibration/shock absorption, gap securing, and alignment/support functions.

Even in the absence of pads, the same function may be replaced by reinforcing ribs/spacers/adhesive layers/clips.

The end frame 17 may include a first part 17V and a second part 17H. The first part 17V may extend along the vertical portion 13V and may cover the outside of the vertical portion 13V.

The second part 17H may intersect the first part 17V and may cover a part of the front of the guide panel 13 and the display panel 110.

A pad (DP) may be located between the second part 17H and the display panel 110, and may be coupled to the second part 17H.

The end frame 17 and the pad (DP) provide light shielding, alignment, pressing, and vibration damping functions, and component integration (integrated with the guide panel), position change, and number increase/decrease are possible.

Even when latches/ribs/clips are formed on some of the illustrated parts, the corresponding latches/ribs/clips are not dependent on specific parts and may be independently formed and act on other supports or separate parts.

Meanwhile, a cable (C) may be electrically connected to the display panel 110 and a source PCB (S-PCB, Source Printed Circuit Board).

The cable (C) may pass between the guide panel 13 and the end frame 17, and may be connected to the source PCB (S-PCB) at the rear of the frame 60.

For example, the cable (C) may be a Flexible Flat Cable (FFC). The form (FFC/FPC/wire harness, etc.), wiring path, and fixing part (clip/tape/guide channel) of the cable (C) may be arbitrarily changed according to design, EMI, and assemblability requirements, and application of a bypass path/multiple paths/extension connector is possible.

Referring to FIG. 19, it can be seen that the intensity of blue-based light (B) decreased by a certain amount (BG), the intensity of green-based light (G) also decreased by a certain amount (GG), and the intensity of red-based light (R) also decreased by a certain amount (RG).

On the other hand, it can be seen that the boundary (delta) between the green-based light (G) and the red-based light (R) has become clear (dotted circle).

The above change may be understood as an effect in which the light absorbing function induces selective subtraction of the G/R overlapping band (e.g., yellow to orange wavelength region) and is combined with the light recirculation path between the reflective sheet-light guide panel-optical sheet to improve color purity and color mixing characteristics.

At this time, "clarification of the boundary (delta)" may be expressed as a quantitative index such as a decrease in the relative overlap amount of G and R components, an increase in separation between peaks, or a shift of a normalized intersection point, but is not limited to a specific index.

It can be seen that not only is the color purity of the blue-based light (B) high, but the purity of the green-based light (G) and the red-based light (R) is also increased.

High color purity may mean that color expression capability is improved. This means that high image quality can be implemented.

Here, "improvement of color purity/color expression capability" means that the angular distribution and spectrum distribution of panel incident light are optimized to contribute to expansion of color gamut (e.g., DCI-P3 based), reduction of afterimage during color mixing, reduction of moiré/hatch phenomenon, etc., and specific numerical values, indices, and measurement conditions may be designed and selected according to system requirements.

In other words, the blue (B), green (G), and red (R) series are distributed separately from each other, indicating a state of excellent color reproducibility.

This is because the display device 100 (see FIG. 1) displays various colors with a combination of blue (B), green (G), and red (R).

In addition, since the light provided by the display device 100 (see FIG. 1) is not biased toward any one-color series, excellent color reproducibility (which may also be expressed as an appropriate color temperature) can be realized.

Accordingly, the display device 100 (see FIG. 1) may provide an overlapping area ratio between a color gamut provided by the display panel 110 (see FIG. 1) and a DCI-P3 color space of 93% or more based on the CIE 1976 chromaticity u'v' coordinate system, and a luminance of 400 cd/m² or more based on a white screen.

The above numerical values are representative examples, and values may vary depending on the measurement environment (e.g., ambient temperature, driving current, dimming state, measurement angle/point) or normalization criteria.

Therefore, the present disclosure aims to achieve at least one performance criterion (e.g., color gamut/luminance/color purity/uniformity, etc.), and the remaining criteria may be adjusted according to design and use.

Also, the same performance target may be achieved by different combinations of the position/shape/concentration of the light absorbing layer, the light recirculation structure (reflection/scattering characteristics), and the light source spectrum combination.

In addition, since the light provided by the display device is not biased toward any one color series, excellent color reproducibility (which may also be expressed as an appropriate color temperature) can be realized.

The color temperature of an image provided on the front surface of the display panel may be 10,000 to 12,000 K.

The color temperature range (e.g., 10,000-12,000 K) is only an example, and may be set to a different white point/color temperature (e.g., near D65 or high color temperature) according to the target image quality (viewing environment, product category).

The color temperature can be adjusted by LED bin, phosphor composition, light absorbing layer characteristics, driving algorithm, etc., and should be understood as a representative value under certain conditions.

Referring to FIGS. 1 to 19, the display device comprises: a light source configured to emit white light by including phosphors including β-SiAlON, KSF, and Nitride;
a display panel configured to display an image through light provided from the light source;
an optical sheet including a prism sheet and disposed on an optical path from the light source toward the display panel;
a light guide panel disposed on the optical path from the light source toward the optical sheet; and
a reflective sheet located opposite to the optical sheet with respect to the light guide panel, wherein the reflective sheet comprises: a reflective film including a PET material and cavities; and
a coating layer laminated on the reflective film, wherein the coating layer comprises: a plurality of beads by which light is diffusely reflected; and
an absorbent configured to selectively absorb at least one of yellow-based light or orange-based light among light directed toward the reflective film or light reflected from the reflective film, wherein the absorbent may be 0.0003 wt% to 0.0005 wt% based on a total weight of the coating layer.

Each element listed here (light source/optical sheet/light guide panel/reflective sheet/coating layer and beads/absorbent material) is not dependent on each other and can be applied functionally independently, and at least one element alone can achieve some of the objects of the present disclosure (color separation improvement, color reproduction improvement, light efficiency optimization).

In addition, each element may be replaced or supplemented by functionally equivalent means (e.g., other phosphors, other high-reflection films, other optical layer configurations).

Light absorbed by the absorbent material may be in a wavelength band of 570 nm to 610 nm.

The above wavelength band is an example and may be adjusted to selectively include at least one of a partial section such as 540-610 nm or an extended section according to a design target (e.g., G/R overlapping band suppression amount).

The display device may provide an overlapping area ratio between a color gamut provided by the display panel and a DCI-P3 color space of 93% or more based on the CIE 1976 chromaticity u'v' coordinate system, and a luminance of 400 cd/m² or more based on a white screen.

The above numerical values are representative examples, and may vary depending on measurement conditions (ambient temperature/driving current/dimming mode/measurement angle/point/normalization criteria).

Therefore, the present disclosure aims to achieve at least one performance index (e.g., color gamut/luminance/color purity/uniformity), and other indices may be adjusted according to use and product group.

The light guide panel may include: an upper surface; and a lower surface facing the upper surface, wherein the upper surface faces the optical sheet, the lower surface faces the reflective sheet, the upper surface has a prism pattern, and the lower surface has a reflective pattern.

The pattern is an exemplary shape, and any light distribution/diffusion/light collecting function pattern such as prism/microlens/diffuse reflection texture/dot/grid/unevenness may be applied to at least one of the upper surface/lower surface.

In the absence of a pattern, a sheet/coating/laminate film can perform an equivalent function.

The thickness of the reflective film may be 200 micrometers to 250 micrometers, the thickness of the coating layer may be 20 micrometers to 40 micrometers, and the coating layer may include an absorbent material having a thickness of 15 micrometers to 25 micrometers.

The thicknesses and contents may be adjusted within a design range according to the manufacturing process, material composition, and target light distribution, and are not limited to a single value/section.

In addition, the same function may be achieved through local thickness variation (gradation/pattern type).

The thickness of the reflective film may be 225 micrometers, the thickness of the coating layer may be 30 micrometers, and the coating layer may include an absorbent material having a thickness of 20 micrometers.

The above-mentioned "225/30/20 µm" is a representative example, and may vary depending on the measurement method and process deviation.

Different thickness combinations may be applied within a range that achieves the same function.

The absorbent material may include Tetra Aza Porphyrin. The absorbent material is not limited to a specific chemical formula and may be replaced by a functional equivalent (including organic/inorganic dyes, pigments, nanoparticles) exhibiting selective absorption characteristics in the above wavelength band.

The coating layer may have a plurality of different heights. "Different heights" may be implemented by surface unevenness/micro-patterns/local application/particle dispersion, etc., and includes any shape such as uniform/non-uniform, continuous film/dot/stripe/gradation.

Light provided from the light source may be incident on a side surface of the light guide panel, reflected by the reflective sheet, and directed toward the optical sheet.

The light path is merely an example and is also applicable to a Direct Type (Backlight Direct Type) or a mixed type.

Light may be incident and recirculated through at least one path among side/bottom/rear, and the order and number of times of paths may vary depending on the optical stack design.

The color temperature of an image provided on the front surface of the display panel may be 10,000 to 12,000 K.

The color temperature range may vary depending on the product group/viewing environment/setting mode, and the white point (high color temperature, etc.) may be set by a combination of driving algorithm, phosphor composition, and light absorbing layer characteristics.

The display device may further include:
a frame located opposite to the light guide panel with respect to the reflective sheet, on which the reflective sheet is disposed;
a housing located between the reflective sheet and the frame and adjacent to the light source;
a light assembly coupled to the housing, including the light source, and disposed on a side surface of the light guide panel;and
a guide panel coupled to the frame or the housing and supporting a rear surface adjacent to an edge of the display panel.

The frame/housing/guide panel/light assembly are not dependent on each other, and may be supported and fastened by any method among direct or indirect coupling.

Alternative support means such as latches/ribs/clips/adhesive layers/brackets may be selected, and even if some parts are omitted or integrated, the gist of the present disclosure is maintained.

The thickness of the light guide panel may be 2 mm, and the thickness of the reflective sheet may be 0.255 mm.

An interval between the light source and the side surface of the light guide panel may be 0.35 mm.

The thickness of the optical sheet may be 0.41 mm.

A plurality of the light assemblies may be disposed on the housing along a longitudinal direction of a lower side of the display panel.

The dimension, interval, and arrangement values are examples, and may be set to ranges according to manufacturing tolerances/thermal/mechanical requirements/optical performance and may be designed differently for each region (zone variable) or model.

The embodiments of the present disclosure described above or other embodiments are not mutually exclusive or distinct.

The configurations or functions of any embodiments of the present disclosure described above or other embodiments may be used together or combined.

The detailed description above should not be construed as limiting in all respects and should be considered as illustrative.

The scope of the present invention should be determined by rational interpretation of the appended claims, and all changes within the equivalent scope of the present invention are included in the scope of the present invention.

## Claims

1. A display device comprising:
a light source (124) configured to emit white light by using phosphors including β-SiAlON, KSF and a nitride;
a display panel (110) configured to display an image using light from the light source (124);
an optical sheet (125) arranged on an optical path from the light source (124) toward the display panel (110);
a light guide panel (128) arranged on the optical path from the light source (124) toward the optical sheet (125); and
a reflective sheet (126) disposed opposite to the optical sheet (125) with respect to the light guide panel (128),
wherein the reflective sheet (126) comprises a reflective film including PET material and cavities (C), and
a coating layer (1264) laminated on the reflective film, the coating layer (1264) including a plurality of beads (a) to diffusely reflect light and an absorbent (b) configured to selectively absorb at least one of yellow-based light or orange-based light directed toward, or reflected from, the reflective film of the reflective sheet (126),
wherein the absorbent (b) is 0.0003 wt% to 0.0005 wt% based on a total weight of the coating layer (1264).

2. The display device of claim 1, wherein the absorbent (b) absorbs light in a wavelength band of 570 nm to 610 nm.

3. The display device of claim 1 or 2, wherein the absorbent (b) exhibits at least one absorption peak at 595 nm and/or 543 nm and/or absorbs in a band of 540 nm to 610 nm.

4. The display device of any preceding claim, wherein the absorbent (b) comprises Tetra Aza Porphyrin.

5. The display device of any preceding claim, wherein the coating layer (1264) has a thickness of 20 µm to 40 µm.

6. The display device of any preceding claim, wherein the reflective film of the reflective sheet (126) has a thickness of 200 µm to 250 µm.

7. The display device of claim 6, wherein the reflective film of the reflective sheet (126) has a thickness of 225 µm.

8. The display device of any preceding claim, wherein the coating layer (1264) comprises the absorbent having a thickness of 15 µm to 25 µm.

9. The display device of any preceding claim, wherein the beads (a) have an average diameter of 40 µm and are dispersed in a base matrix (c) of the coating layer (1264).

10. The display device of any preceding claim, wherein the reflective film of the reflective sheet (126) has a reflectance of 95% to 98%, or 96.6%.

11. The display device of any preceding claim, wherein the coating layer (1264) has mutually different heights over the reflective film of the reflective sheet (126).

12. The display device of any preceding claim, wherein the reflective film of the reflective sheet (126) comprises a middle layer (1261) with cavities (C) and top and bottom layers (1262, 1263) without cavities, the cavities (C) being formed by a foaming process.

13. The display device of claim 12, wherein the cavities (C) have a size of 0.4 µm to 1.2 µm.

14. The display device of any preceding claim, wherein the light guide panel (128) has a prism pattern on an upper surface and a reflective pattern on a lower surface.

15. The display device of any preceding claim, wherein light from the light source (124) enters a side surface of the light guide panel (128), is reflected by the reflective sheet (126), and proceeds toward the optical sheet (125).
